# EUROPEAN PATENT APPLICATION

(11) **EP 0 941 969 A1**
(43) Date of publication of application: **15.09.1999**
(21) Application number: 99104743.2
(22) Date of filing: 10.03.1999
(51) Int. Cl.: C02F 1/30, C02F 1/48, C02F 1/68, C02F 3/06, C02F 9/00

(54) **Devices processing water using tourmaline composite grains**

(30) Priority: 12.03.1998 JP 6108398; 12.03.1998 JP 6108498; 14.05.1998 JP 13201198
(71) Applicant: Sano, Hikohiro, Kasugai-shi, Aichi-ken (JP); MINO GANRYO KAGAKU CORPORATION, Toki-shi, Gifu-ken (JP)
(72) Inventor: Sano, Hikohiro, Kasugai-shi (JP); Kakamu, Yoshinori, Toki-shi, Gifu-ken (JP); Tanaka, Minoru, Kasugai-shi, Aichi-ken (JP)
(74) Representative: Dallmeyer, Georg, Dipl.-Ing.

(57) **Abstract**

Tourmaline fine powders are mixed with glass powders having melting point between 500°C and the transition temperature of tourmaline, and the grains are formed from the mixture and sintered at a temperature below melting point of the glass. Tourmaline powders are stacked in the glass matrix in the tourmaline composite grains prepared above. When water passes through a case including many such grains, the water contacts with the grains and is converted to activated water by the grains. By using the activated water, a structure such as a moving vehicle or an outer wall of a building can be washed efficiently without a detergent. Further, the grains can be used in an apparatus for recycling wash water (201) which comprises a tank for storing waste water (203), and a tower which contains the tourmaline composite grains (206). The tower converts water received from the tank to activated water by contacting the water to the tourmaline composite grains and supplies the activated water for washing.

## Description

### BACKGROUND OF THE INVENTION

### FIELD OF THE INVENTION

The present invention relates to an apparatus which processes water by using composite grains of tourmaline.

### DESCRIPTION OF PRIOR ART

In general, a structure such as an automobile, a railroad train, an airplane or an outer wall of a building exposed to outdoor environment is washed to remove dirt due to adherence of dust, oil or mud. When such a structure is washed, a detergent or a drug is used to improve washing performance. For example, an automobile is washed to remove dirt adhered on the body thereof, and it is waxed thereafter to improve its luster and to suppress adhesion of dust or the like.

When washing with a detergent or a drug is repeated, however, the surface of the structure is changed in quality or deteriorated by the detergent. For example, the coating on the body of an automobile is deteriorated and loses its luster. Further, because a large amount of detergent is used in the washing of large structures, the water quality in a river, a lake, a pond or an inland sea becomes worse if the detergent is not processed sufficiently in sewerage systems and the like. It is also a problem that water resources are used wastefully, especially in the times of water shortage.

Further, underground water or well water is often used in the washing of such structures because of the low cost. In such a case, it is a problem that green moss grows on the surface of the structures. Therefore, it is desirable that structures are washed effectively while keeping luster of the surface thereof.

### SUMMARY OF THE INVENTION

A main object of the present invention is to provide an apparatus which solves these problems.

The above object is solved by the combinations of the characteristics described in the main claim, and the subclaims define further advantageous embodiments of the invention.

In one aspect of the invention, a water supply apparatus for supplying wash water comprises a tank for storing raw water, a water supplier which supplies the raw water stored in he tank, and a tower containing tourmaline composite grains. The tower receives the raw water supplied from the tank by the water supplier, and makes the raw water flow therethrough to contact with the tourmaline composite grains. Thus, raw water is converted to activated water by contacting with the tourmaline composite grains, and the activated water can be supplied. The tourmaline composite comprises a glass matrix and fine powders of tourmaline dispersed therein of weight ratio equal to or larger than 30 %. Preferably, the glass matrix is made of glass having melting point between 500 °C and transition point of tourmaline. For example, the glass matrix contains zinc, or it contains boron.

For example, in the the water supply apparatus, the tower comprises an outer tube and a plurality of inner tubes stacked inside the outer tube, the inner tubes having an open top end a bottom plate having openings, the tourmaline composite grains being contained in each of the inner tubes.

For example, in the water supply apparatus, the plurality of inner tubes are made of a plastics material.

For example, in the water supply apparatus, the tourmaline composite grains are arranged in the inner tubes to form a fluidized layer by the raw water flowing through the openings into the inner tubes.

For example, in the water supply apparatus, the water supplier applies a pressure to an air portion in the tank to send the raw water to the tower.

In another aspect of the invention, an apparatus for recycling water comprises a tank for storing waste water after washing, and a tower which contains the above-mentioned tourmaline composite grains. The tower converts water received from the tank to activated water by contacting the water to the tourmaline composite grains and supplies the activated water for washing. Preferably, a preprocessor is provided between the tank and the tower for processing the waste water for improving the activation in the tank. A washing machine may be connected to the tank for washing an object physically with the activated water.

For example, the apparatus further comprises a second tower provided between the reservoir and the first tower. The second tower decomposes organic substances in the waste water received from the reservoir and supplies the waste water to the first tower after decomposing organic substances.

For example, the second tower comprises an outer tube of a hollow cylinder, a radiation processor which contains grains of natural radiator substance combined with a binder, and a biological processor which contains aerobic bacteria. The water received from the reservoir passes through the radiation processor and the biological processor in the outer tube.

Preferebly, in the apparatus, the grains of natural radiator substance includes a rare earth having natural radiations.

For example, the apparatus further comprises a washing machine which washes an object physically with use of water, and a supply path which supplies the activated water from the first tower to the washing machine.

For example, in the apparatus, the washing machine washes an object with brushing.

For example, the apparatus further comprises a preprocessing tank provided between the reservoir and the second tower to control concentration of impurities included in the waste water.

For example, the first tower further comprises a supplier which supplies virgin water into the first tower.

Preferably, in the apparatus, the reservoir comprises a filter for removing dirt floating in the waste water.

This summary of the invention does not necessarily describe all necessary features so that the invention may also be a sub-combination of these described features.

An advantage of the present invention is that the washing performance of water is enhanced largely.

Another advantage of the present invention is that water can be recycled efficiently.

A further advantage of the present invention is that a structure such as an automobile can be washed with a physical means without a detergent.

### BRIEF DESCRIPTION OF THE DRAWINGS

These and other objects and features of the present invention will become clear from the following description taken in conjunction with the preferred embodiments thereof with reference to the accompanying drawings, and in which:
Fig. 1 is a schematic diagram of arrangement of tourmaline fine powders in a composite grain;
Fig. 2 is an X-ray diffraction chart of tourmaline composite grain (tourmaline : glass = 7 : 3);
Fig. 3 is a sectional front view of an apparatus for supplying wash water;
Fig. 4 is a sectional front view of an inner cylinder in the apparatus for supplying wash water;
Fig. 5 is a plan view of the inner cylinder;
Fig. 6 is a schematic diagram of an apparatus for washing a motor vehicle;
Fig. 7 is a sectional front view of a tower for decomposing organic substances in the apparatus for washing a motor vehicle; and
Fig. 8 is a sectional front view of a tower for activating water in the apparatus for washing a motor vehicle.

### DETAILED DESCRIPTION OF THE PREFERRED EMBODIMENTS

Referring now to the drawings, wherein like reference characters designate like or corresponding parts throughout the views, embodiments of the invention are explained. Apparatuses which processes water according to the invention use tourmaline composite grains described in Japanese Patent laid open Publication 9-110468/1997 by the applicants. Before explaining the apparatuses, the tourmaline composite is explained first with reference to the description in Japanese Patent laid open Publication 9-110468/1997.

Tourmaline is a mineral represented with a chemical formula, NaX₃Al₆(BO₃)₃Si₆O₁₈(OH)₄. It is divided into iron tourmaline (X = Fe), lithia tourmaline (X = Li + Al) and magnesia tourmaline (X = Mg), and mixed crystals thereof are generated. Usually tourmaline including iron tourmaline as a main component is available most. In the crystal structure, ions of Na, Li, Al, Fe etc. are arranged in a network structure of Al₂O₃-B₂O₃-SiO₂. As to electric properties of tourmaline, piezoelectricity and pyroelectricity are found in 1980, and it is known to have permanent electric poles. These properties vanish at about 1,000 °C. Tourmaline is an infrared rays radiator, and the wavelength of infrared radiations is equal to or larger than 10 µm at room temperature.

The tourmaline composite grain comprises a glass matrix and powders of tourmaline dispersed therein of weight ratio equal to or larger than 30 %. Because such a very large amount of tourmaline powders are dispersed in the glass matrix, the tourmaline powders are in contact with each other. Then, there is a large probability that tourmaline powders are aligned in series. The lower limit of 30 % denotes a limit where tourmaline powders are dispersed while being contact in series in the matrix. Though the upper limit is not described, there exists a practical limit for having a sufficient strength with the glass matrix, for example about 70 %.

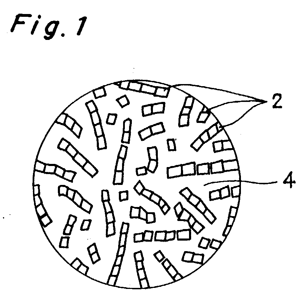

The tourmaline composite grain consists of a large amount (equal to or larger than 30%) of tourmaline fine powders 2 and a glass matrix (binder) 4. Fig. 1 shows schematically series arrangement of tourmaline fine powders 2 in the glass matrix 4. In such a grain, the tourmaline fine particles 2 exist not only on the surface of the grain, but are connected in series inside the grain, and this enhances the electric potential therein. In order to produce a tourmaline sintered material of this structure, tourmaline is pulverized to provide tourmaline fine powders, and they are mixed with glass powders having melting point between 500 °C and the transition temperature of tourmaline. Then, the composite mixture is formed into grains, and the grains are sintered at a temperature lower than the melting point of the glass.

As explained above, the glass matrix is made of glass powders having melting point between 500 °C and transition point of tourmaline. In concrete, the glass matrix is sintered at a temperature below the melting point of the glass powders. At the sintering, the tourmaline powders are also sintered at the same time at a temperature between 450 °C and the transition temperature, and this improves the properties of tourmaline in the matrix. The upper limit of the temperature is set so as to prevent the crystal structure of tourmaline to be destroyed which makes the desired properties of tourmaline lost. The temperature of lower limit of 450 °C is the lowest limit at which sintering effect is expected in a conventional furnace. The sintering improves washing performance or the like of the tourmaline composite grains.

In concrete, in order to prevent adhesion due to melting, the sintering temperature is set to a temperature lower than the melting point by 50 °C or more. The obtained tourmaline composite grains are sintered materials, and they are preferable for uses such as washing which require porosity. Further, the sintering of the glass serves also as the sintering of tourmaline between 450 °C and the transition temperature of tourmaline (preferably between 600 and 800 °C), and as already explained above, the sintering improves the properties of the tourmaline fine powders.

Each of the tourmaline fine powders is an electric cell having plus and minus electric poles (+-). However, as the amount of tourmaline fine powders is increased, there appear many series connection such as (+-) (+-) (+-)··· of the plus and minus poles of tourmaline inside a sintered grain and on the surface thereof. Thus, a probability that the electric potential is increased becomes larger. At the same time, it is inevitable that parallel distribution and reverse connection such as (+-) (-+) are increased in proportion to the amount of tourmaline. It is said that the potential difference of one tourmaline is 2 - 10 eV. The electric potential of a commercial cell is 1.5 V, and the electrical decomposition voltage of water is 1.0 V (1 V = 10¹⁹ eV). In order to increase the electric potential of the sintered grain to the above value as much as possible, it is necessary that (1) the tourmaline is pulverized as small as possible, to provide the largest magnitude of electric potential for a single cell, and (2) the tourmaline is collected as much as possible. In this embodiment, tourmaline fine powders 2 of median size of about 1.0 µm which can be pulverized with a conventional industrial process, and the particles 2 are connected as much as possible in the sintered grains to increase the entire electric potential. As shown schematically in Fig. 1, a minus pole at the bottom of a particle 2 contacts with a plus pole at the top of a next particle 2, and a minus pole at the bottom of the particle 2 contacts with a plus pole at the top of a further particle 2, and so on. Thus, many tourmaline fine powders 2 are connected in series. Though there are isolated powders and electrically neutralized ones, the grains are produced to increase connections so as to enhance the entire electric potential. Thus, it is necessary to distribute the tourmaline powders homogeneously in the binder 4, and it is preferable to form grains by using water-containing material pulverized and mixed with a wet process.

A glass powder of low melting point (of dielectric constant of about 4 - 8) is adopted as the binder for sintering which has melting point of 500 - 850 °C similar to the heat treatment temperature range of the tourmaline fine powders 2 explained above and has similar composition to tourmaline. That is, the binder can perform the heating for generating electric potential of tourmaline, and the collection and fixing of tourmaline fine powders at the same temperature simultaneously. The binder is fine powder having a composition similar to tourmaline (SiO₂, B₂O₃, Al₂O₃, MgO, ZnO etc.) and having been transformed to glass already. The thermal conduction and the expansion coefficient thereof are about the same as those of tourmaline, and the shift in the tourmaline crystals is generated smoothly. The glass powders can sinter a large amount of tourmaline powders (between about 30 % and 70%) at a temperature near the melting point. The upper limit of the tourmaline component is a value at which the fixing with the binder is possible, and the strength of fixing is maintained to about 70 %. The lower limit of 30 % is a value to which advantages of the invention are confirmed and the tourmaline fine powders are arranged in series. It is considered that the grains can be used practically even if the amount is less than 30 %.

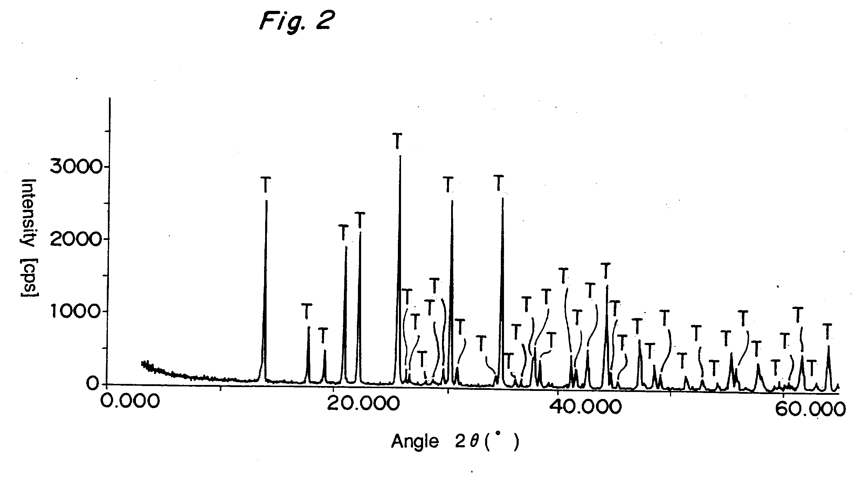

Fig. 2 is a powder X-ray diffraction chart of tourmaline composite grain (tourmaline : glass = 7 : 3) produced as explained above wherein the abscissa 2 θ is X ray diffraction angle. In Fig. 2, diffraction peaks denoted with "T" are ascribed to tourmaline, and this means that tourmaline exists not deteriorated. It is to be noted that diffraction lines of the matrix 4 do not appear because the matrix is a glass.

In order to study the capacity of the granular sintered material for ionizing water, the capacity of the oil decomposition is observed. The sample grains used for observation have three kinds of weight ratio of tourmaline to glass of 3:7, 5:5 and 7:3, prepared as explained above. By putting 15 g of the sample grains in 200 ml of a polyethylene container and adding 200 ml of water and 2 ml of cooking oil thereto, the degree of oil decomposition is observed for two months by stirring for two minutes twice a day. According to the results, decomposition process of emulsifying → rubber-like viscous state → low viscous state → gruel state proceeds efficiently in the order of weight ratio of 7:3 > 5:5 > 3:7, the resistance on stirring is decreased and turbidity is increased. This means that oil decomposition proceeds faster as the amount of tourmaline increases.

Grains are produced in a wide range of ratio of tourmaline to glass, and powder X-ray diffraction is measured thereon. The existence of tourmaline is confirmed at least in the range between 3:7 and 7:3 of weight ratio of tourmaline to glass. No diffraction peak due to different crystal structures are observed. Diffraction peaks due to tourmaline are also observed in samples outside the above range.

Tourmaline is a far infrared radiator. In order to enhance the emissivity, glass having high far infrared emissivity is selected as the low melting point glass powder used for combining the tourmaline powders. Usually, it is sufficient to select as the binder glass powders having a skeleton of silicic acid-boric acid-alumina and added with lime, magnesia and alkali. However, in order to enhance infrared emissivity, the glass powders having low melting point (550 °C) is prepared which includes mainly silicic acid-boric acid-alumina and zinc and alkali.

As explained above, low melting point glass powders, having a similar composition and having melting point below the temperature at which the crystal structure of tourmaline is destroyed, are mixed with a large amount of pulverized tourmaline as much as possible, and is crushed as finely as possible in a wet pulverizing process. The obtained water-including material is formed and sintered at a temperature lower a little than the melting point of the glass powders. Thus, tourmaline composite grains can be produced which increase electric potential and far infrared emissivity of natural tourmaline to a practical level.

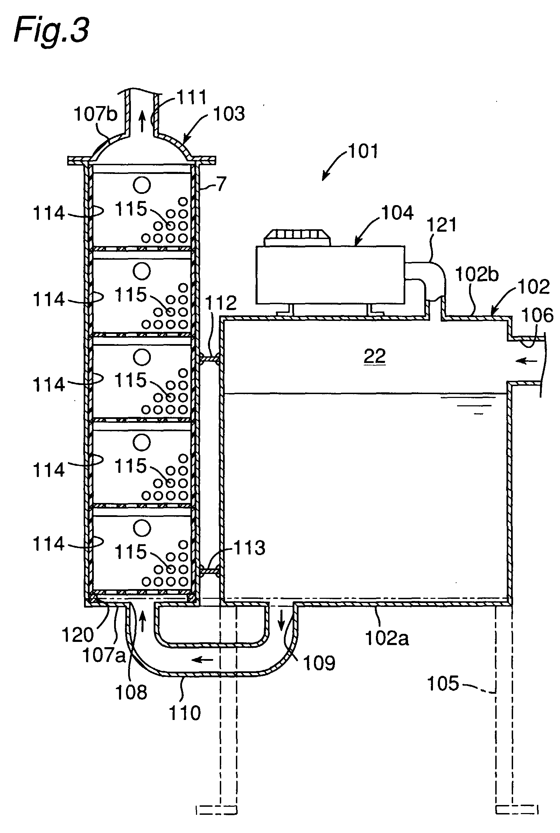

Next, an embodiment of an apparatus 101 for supplying wash water is explained. As shown in Fig. 3, the apparatus 101 includes a raw water tank 102 for storing raw water, an activated water tower 103 for activating water (that is, for supplying water rich in OH⁻ ions and relatively small clusters) by converting the raw water, and a pressure pump (or compressor) 104 for transferring the raw water in the tank 102 to the activated water tower 103. The tank 102 is made of steel plates and mounted on a base 105. Raw water is introduced through an inlet 106 into the tank 102. The inner face of the tank 102 is subjected to coating or lining with a resin or the like in order to improve corrosion inhibition. Raw water is for example tap water, underground water or well water. The material of the tank 102 is not limited to steel plates, and any material can be used as far as the strength is sufficient (for example, so as not to destroy the tank until the inner pressure in the tank is increased up to about 2 kg/cm²).

The activated water tower 103 is also mounted to the base 105. The tower 103 has an outer tube 107 of hollow cylinder made of steel plates. An inlet 108 provided at the bottom end wall 107a of the outer tube 107 is connected through a supply tube 10 to an outlet 109 of the raw water tank 102 provided at the bottom 102a thereof. Further, an outlet 111 is provided at the top wall 107b of the tower 103 to supply activated water. The outer tube 107 is fixed with fixing members 112 and 113 to the raw water tank 102.

Inside the outer tube 107, five inner tubes 114 of hollow cylinders are stacked in multi-stages. Many tourmaline composite grains 115 having shapes of beads or balls are contained inside the inner tubes 114, as shown schematically in Fig. 3. The grains 115 are made of fine tourmaline powders combined with a binder of low melting point glass as explained above. As the glass, the low melting point glass powders including zinc explained above are used.

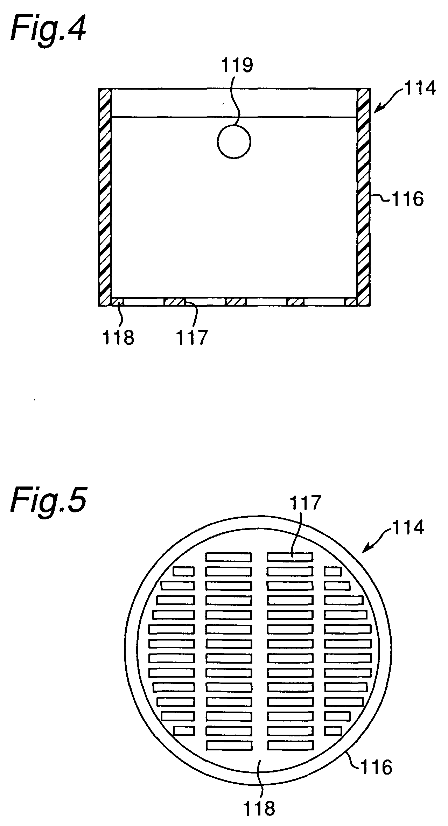

As shown in Figs. 4 and 5, the inner tube 114 is made of a tube part 116 made of a plastics material and having a form of hollow cylinder, and a base plate 118 made of punching metal, fixed to the bottom of the tube part 116 and having many openings 117. Each opening 117 is rectangular, and its shorter size is smaller than the diameter of the tourmaline composite grains so as for them not to pass therethrough. Further, a handle 119 is fixed to the inner tube 114 (tube part 116) for carrying the inner tube easily. The tube part and the bottom of the inner tube 114 may be made of a plastics material as an integral product without using punching metal. The lowest inner tube 114 among the five stacked inner tubes is arranged above the bottom wall 107a of the outer tube 107 on a spacer 120. The spacer 120 is set in order to introduce the raw water received through the inlet 108 in the outer tube 107, into the lowest inner tube 114 uniformly.

The pressure pump (compressor) 104 is put on the top wall 102b of the raw water tank 102, and air pressurized by the pump 104 is introduced through a path 21 into an air portion 122 in the tank 102. When raw water in the tank 102 is supplied to the activated water tower 103, the inlet 106 is closed with a valve (not shown), and the pressurized air is supplied by the pump 104 in the tank 102. Thus, the air pressure in the air portion 122 presses the raw water in the tank 102 toward the activated water tower 103. The air pressure in the air portion 122 is for example 1.5 kg/cm².

In the tower 103, the raw water introduced from the tank 102 is converted to activated water by contacting with the tourmaline composite grains 115 inside the inner tubes 114. In each inner tube 114, the raw water flows upward. This flow moves the grains 115 vigorously, and the tourmaline composite grains 115 form a fluidized layer in the inner tube 114. Thus, friction contact of water with the grains or friction contact between the grains is accelerated, and the conversion from raw water to activated water is improved.

The mechanism on the conversion of raw water to activated water is repeated briefly here. A part of H₃O⁺ ions (hydronium ions) produced by ionization of water contacts with a metal or plastics (resin) of the inner tubes 114 and vanishes by losing the positive charge. This action is apparent especially for the plastics as the material of the tube portion 116 of the inner tube 114. Because negative charges are generated on the plastics surface by the friction contact with water, and the negative charges neutralize the positive charges of H₃O⁺ ions to decrease the H₃O⁺ concentration. Thus, water includes many OH⁻ ions (or H₃O₂⁻ ions). Further, when H₃O⁺ contacts with iron surface, the iron receives the positive charge to become Fe²⁺ and Fe³⁺ to get rusty, but the resultant FeO and Fe₂O₃ are combined to form a coating film of magnetite (Fe₃O₄). Thus the H₃O⁺ is consumed so that iron becomes the passive state to prevent further corrosion. As explained above, OH⁻ ions generated by the tourmaline composite grains 115 increase the washing performance of water. As explained above, far infrared rays emitted from the tourmaline composite grains 115 are absorbed by water to divide clusters into relatively small clusters of 7 - 8 water molecules. Further, as secondary effects, impurities included are sent out, solubility is increased, surface tension is decreased, and vaporization is enhanced. These effects enhance the washing performance of the activated water.

Further, because the binder in the tourmaline composite grains includes zinc component (Zn), a very small amount of zinc is dissolved in water from the tourmaline composite grains in the activated water tower 103, and the wash water includes the very small amount of zinc. When a structure such as an automobile, a railroad train, an airplane or an outer wall of a building exposed to outdoor environment is washed with the wash water, zinc included in the wash water deposits by a very small amount in very small recesses on the surface of the structure and it becomes zinc oxide ZnO. When ZnO which is a semiconductor receives ultraviolet rays in sunlight, the electrical conduction occurs to release the electrostatic charges on the surface or removes them. Thus, the surface becomes hard for dust or the like to adhere thereto.

Further, because tourmaline or the binder in the grains include boron (B), a very small amount of boron is dissolved in water from the tourmaline composite grains in the activated water tower 103, and the wash water includes the very small amount of boron. When a structure is washed with the wash water, boron included in the wash water deposits by a very small amount on the surface of the structure to form a thin coating (coexistence of ZnO). The boron coating protects the surface of the structure, and increases the luster of the surface. Thus, the luster or the beauty of the structure is improved.

As explained above, raw water is converted to activated water in the activated water tower 103, and the activated water is supplied from the tower 103 as wash water. By using the activated water as wash water, various structures such as an automobile or an outer wall of a building can be washed effectively without using a detergent.

Various advantages are observed when the wash water is used.
(a) A detergent or a drug for washing is not needed. Washing is performed only with a physical technique such as brushing. Therefore, the surface of a structure is not changed in quality or is not deteriorated, and the water does not become dirty. Washer's hands are not harmed. Further, washing operation becomes simple, and washing cost is decreased.
(b) Green moss or the like does not grow on the surface of a structure after washing.
(c) Electrostatic charges on the surface of a structure are removed by zinc oxide deposited on the structure, and dirt or the like becomes harder to adhere to the surface.
(d) The luster of the surface of a structure becomes better by boron deposited on the surface, and waxing is not necessary.

Table 1 shows an example of water compositions in the unit of mg/liter of raw water (well water in this example) and activated water obtained from the raw water.

**Table 1**

| Composition of well water and washing water (activated water) | | |
|---|---|---|
| Component (mg/liter) | Activated water | Well water |
| Zn | 0.11 | 0.005 |
| B | 0.34 | 0.02 |
| Na | 11 | 10 |
| K | 4.9 | 4.9 |
| Mg | 9.1 | 9.1 |
| Ca | 0.88 | 0.94 |
| SiO₂ | 20 | 20 |
| Mn | 0.08 | 0.12 |
| Cl⁻ | 6.8 | 6.8 |
| NO₃⁻ | 0.23 | 0.15 |
| SO₄²⁻ | 6.1 | 6.2 |

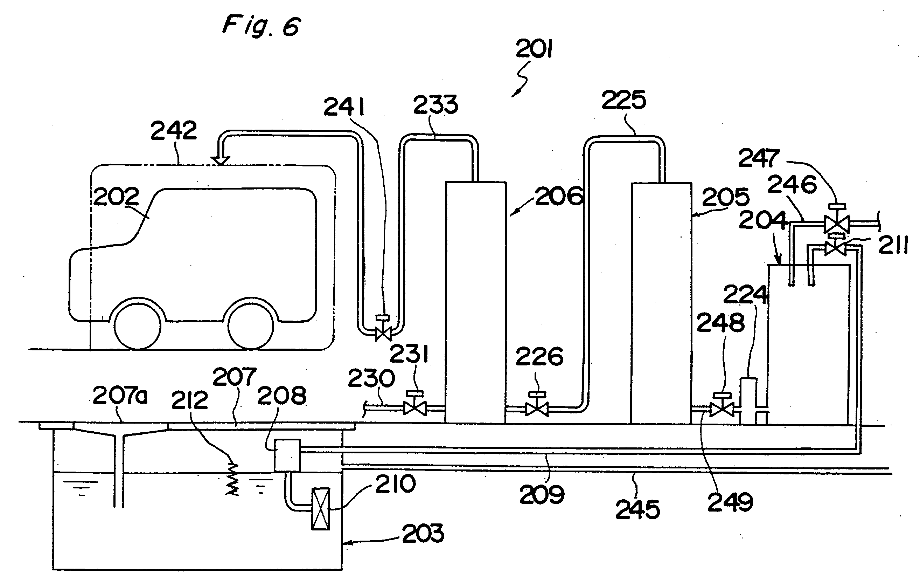

As mentioned above, various structures such as a motor vehicle or an outer wall of a building can be washed effectively with the activated water, without using a detergent. Further, water can be recycled for washing. As an example, Fig. 6 shows an apparatus 201 for a motor vehicle 202 which supplies wash water by recycling. The object to be washed is not limited to the motor vehicle.

The apparatus 201 has a waste water reservoir 203 which stores waste water after washing a motor vehicle 202 such as an automobile, a water tank 204 which controls the concentrations of dirt contents included in the waste water introduced from the waste water reservoir 203 at a constant level, a second tower 205 which decomposes organic substances in the water received from the water tank 204 to purify the water, and a first tower or an activated water tower 206 which converts the water purified by the second tower 205 to activated water (rich in OH⁻ ions and including relatively small water clusters) by the tourmaline composite grains and supplied the activated water. The water tank 204 and the second tower 205 are provided for preprocessing the waste water supplied for the waste water reservoir 203 before supplying it to the first tower 206 for activating the waste water.

The waste water reservoir 203 is a water reservoir made of concrete and built underground. The waste water reservoir 203 has a top cover 207 which closes the top end thereof, and the top cover has a member 207a for collecting waste water after washing. A first pump 208 sends the waste water in the tank 203 through a supply pipe 209 to the water tank 204 for controlling concentration. A filter 210 is provided at an inlet end of the first pump 209 and it removes dirts such as solid substances and oil floating in the waste water. A valve 211 is provided at an outlet end of the supply pipe 209 for opening and closing the pipe. Further, a fence 212 is set in the reservoir 203 near the inlet end of the first pump 208 or the filter 210 in order to remove oil floating in the water. A discharge path 245 is provided to discharge the waste water in the reservoir 203 to the external.

The waste water tank 204 for controlling the concentration has a supplier 246 for supplying virgin water (such as tap water or well water) into the water tank 204. According to the concentration of the impurities included in the waste water in the water tank 204, a valve 247 is opened or closed to add virgin water to the waste water. An outlet is provided at the lower portion of the water tank 204, and the waste water after controlling the concentration is introduced by a second pump 224 through a path 249 with a valve 248 to the second tower 205 for decomposing organic substances.

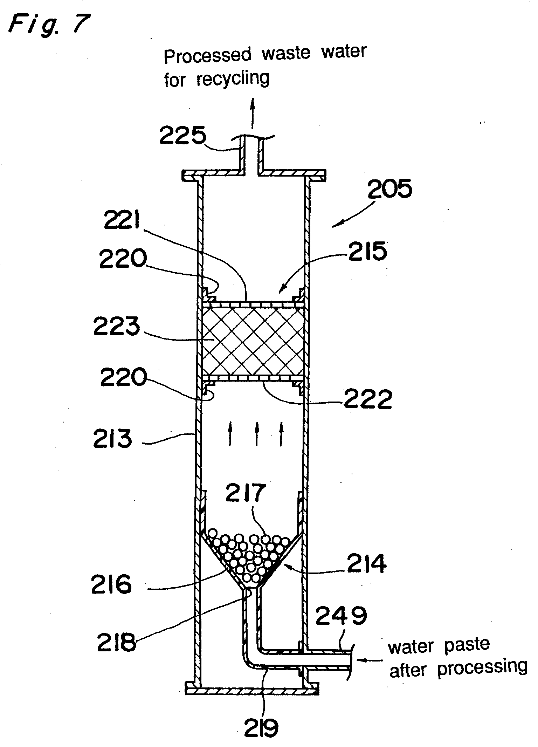

As shown in Fig. 7, the second tower 205 has an outer tube 213 having a shape of hollow cylinder and made of steel plate, and the outer tube 213 contains a radiation processor 214 at the lower part and a biological processor 215 at the upper part. It is desirable that the distance between the two processors 214 and 215 is separated as far as possible. The radiation processor 214 has a tray 216 made of a plastics material, and the tray 216 has a tapered section extending upward and a cylindrical section contacting closely to the outer tube 213. The tray 216 contains many grains 217 which include very fine natural radiator substances combined with a binder. The natural radiator substance is for example a rare earth mineral which generates radiations naturally. The grains 217 is hereafter referred to as natural radiation source composite grains. The materials of the outer tube 213 and the tray 216 are not limited to the above ones. For example, the outer tube 213 may be made of a plastics material, or the tray 216 may be made of a metal. The form of the radiation processor 214 is not limited to the above one, and the inner tubes 114 for holding tourmaline composite grains as explained above may be used therefor.

The second or organic substance decomposition tower 205 has an inlet 218 at its lower side for introducing the waste water after concentration control, and the inlet 218 is connected through an L-shaped pipe 219 to the downstream side of the path 249. Therefore, the waste water after concentration control in the water tank 204 is introduced through the path 249 and the pipe 219 to the radiation processor 214, and it flows upward in the tray 216 to contact with the natural radiation source composite grains 217. Thus, the grains 217 are fluidized vigorously by the upward flow of the waste water to accelerate the contact thereof with the waste water. Thus, the decomposition of the organic substances in the waste water is accelerated.

In the radiation processor 214, OH⁻ ions and OH radicals are produced from water molecules in the waste water by radiations (α, β, γ rays) radiated from the natural radiator substances in the natural radiation source composite grains 217, and they decompose organic substances (oil, fat, protein and the like). Further, far infrared rays radiated from the grains 217 divide water clusters in the water, and organic substances contained in the clusters therein are let out, and this also accelerates the decomposition of organic materials by the radiations.

The biological processor 215 mounted above the radiation processor 214 has an upper porous plate 221, a lower porous plate 222 and a biological filter 223 between them. The porous plates 211 and 222 are fixed to the outer tube 213. The biological filter 223 comprises a honeycomb or fibrous base made of a plastics material or the like and a microorganism film on the base. The microorganism film includes many aerobic bacteria. The waste water processed by the radiation processor 214 to decompose organic substances rises in the outer tube 213 to pass through the biological processor 215. The organic substances which have not been decomposed by the radiation processor 214 are decomposed by the aerobic bacteria biologically when it passes through the biological processor 223.

The waste water purified by the radiation and biological processors 214, 215 by decomposing organic substances is supplied through a supply path 225 to the first or activated water tower 206. A valve 226 is provided at an outlet side of the supply path 225 for opening or closing the path 225.

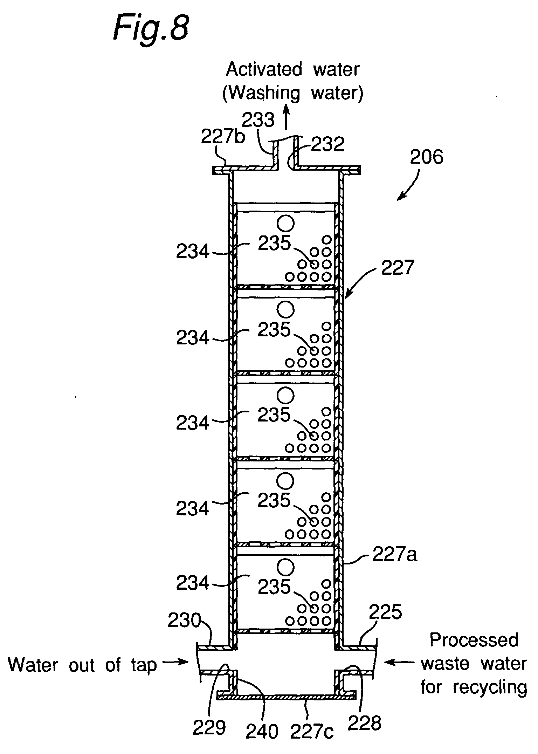

As shown in Fig. 8, the first tower 206 has a similar structure to the activated water tower 103 shown in Fig. 3. The first tower 206 has an outer tube 227 of hollow cylinder made of steel plates. A first inlet 228 provided at the lower side of the outer tube 227 is connected to the down stream end of the supply path 225 to introduce waste water from the second tower 205. Further, at a second inlet 229 provided at the lower side of the outer tube 227 is connected to another supply path 30 for introducing tap water as virgin water, and a valve 31 is provided to open or close the supply path 30. Thus, tap water can be introduced into the first tower 206. Underground water or well water may be used as virgin water instead of tap water. Further, an outlet 232 is provided at a top wall 227b covering the outer tube 227 to send the activated water, and a hose 233 is connected to the outlet 232 for supplying the activated water.

Inside the outer tube 227, five inner tubes 234 of hollow cylinder are stacked in multi-stages. Many tourmaline composite grains 235 having shapes of beads or balls are contained inside the inner tubes 234. The grains 235 are made of fine tourmaline powders combined with a glass binder as explained above. The functions of the grains are explained above, and the explanation thereof is omitted here. The inner tubes 234 are similar to the inner tubes 114 shown in Figs. 4 and 5. The water introduced into the first tower 206 is activated as explained above on the activated water tower 103, and the detailed explanation is omitted here.

The waste water supplied from the second tower 205 or tap water is converted to activated water in the first tower 206, and the activated water is used as wash water. That is, when an automobile 202 is washed by a washing machine 242, a valve 241 provided in the hose 233 is opened, and the automobile 202 is washed by the washing machine 242 with the wash water (activated water) supplied from the first tower 206. The washing machine 242 washes the automobile with water by using a physical means, without using a detergent. In this example, the washing machine 242 washes the automobile with brushing. The blast pressure of the wash water depends on the discharge pressure of the second pump 224 or the supply pressure of tap water. When the automobile 202 is subjected for final washing, it is desirable to introduce tap water to the first tank 206 in order to supply wash water having high washing performance.

An analysis of the activated water which have been purified and converted as explained above shows that it is perfectly transparent, and the remains after evaporation is 87 mg/liter. The activated water includes calcium, magnesium, sodium and silica somewhat, but it does not include iron. The analysis result means that the wash water has similar water quality as tap water as far as the above components are concerned.

Washing effect is compared in a gate-type washing machine for motor vehicle. An automobile is washed with (a) brushing and waxing using underground water, (b) brushing using the activated water and (c) brushing using underground water. Table 2 summarizes the results. The luster of the automobile after washing is measured with a luster meter (Minolta GM-60). It is apparent that the brushing using the activated water according to the embodiment of the invention is far superior than the prior art brushing with underground water and has a similar effect as the prior art washing with brushing and waxing.

**Table 2**

| Luster of automobiles after washing | |
|---|---|
| Washing process | Luster |
| Underground water + brushing and waxing | 170 |
| Activated water + brushing | 165 |
| Underground water + brushing | 123 |
| NB: Luster is measured with Minolta GM-60. | |

The washing of automobile with the above-mentioned apparatus 201 has following advantages.

Because the waste water after washing is recycled by decomposing organic substances, consumption of water for washing moving vehicles is decreased to a large extent, and the water resources can be saved.

Because the activated water obtained by activating waste water after washing has a similar washing performance as a detergent, it is not necessary to use a detergent, and a moving vehicle can be washed efficiently only with a physical means such as brushing with water. Therefore, even if washing is repeated, the coating on the surface of the body of a moving vehicle is not changed in quality or is not deteriorated, and the water does not become dirty. Washer's hands are not harmed. Further, washing operation becomes simple, and washing cost is decreased. Because no microorganisms grow in the activated water, green moss or the like does not grow on the surface of the body. Further, as explained above, zinc included in the binder prevents adhesion of dirts on the surface of the body, and boron included in tourmaline and the binder protects the surface of the body. Because the film including boron enhances luster of the surface, the luster or the beauty of the body becomes good even without waxing.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A water supply apparatus for supplying wash water comprising:
a tank for storing raw water;
a water supplier which supplies the raw water stored in said tank;
a tower containing tourmaline composite grains, receiving the raw water supplied from said tank by said water supplier, making the raw water flow therethrough to contact with the tourmaline composite grains, the tourmaline composite grains comprising a glass matrix and fine powders of tourmaline dispersed therein of weight ratio which is equal to or larger than 30 %.

2. The water supply apparatus according to claim 1, wherein said glass matrix is made of glass having melting point between 500 °C and transition point of tourmaline.

3. The water supply apparatus according to claim 2, wherein said glass matrix contains zinc.

4. The water supply apparatus according to claim 2, wherein said glass matrix contains boron.

5. The water supply apparatus according to claim 1, wherein said tower comprises an outer tube and a plurality of inner tubes stacked inside said outer tube, said inner tubes having an open top end a bottom plate having openings, the tourmaline composite grains being contained in each of said inner tubes.

6. The water supply apparatus according to claim 5, wherein said plurality of inner tubes are made of a plastics material.

7. The water supply apparatus according to claim 5, wherein the tourmaline composite grains are arranged in said inner tubes to form a fluidised layer by the raw water flowing through said openings into said inner tubes.

8. The water supply apparatus according to claim 1, wherein said water supplier applies a pressure to an air portion in said tank to send the raw water to said tower.

9. An apparatus for recycling water, comprising:
a reservoir for storing waste water after washing;
a first tower which contains tourmaline composite grains, converts water received from said reservoir to activated water by contacting the water to the tourmaline composite grains, the tourmaline composite grains comprising a glass matrix and fine powders of tourmaline dispersed therein of weight ratio which is equal to or larger than 30 %, and supplies the activated water for washing.

10. The apparatus according to claim 9, wherein said glass matrix is made of glass having melting point between 500 °C and transition temperature of tourmaline.

11. The apparatus according to claim 9, wherein said glass matrix contains zinc.

12. The apparatus according to claim 9, wherein said glass matrix contains boron.

13. The apparatus according to claim 9, further comprising a second tower provided between said reservoir and said first tower, said second tower decomposing organic substances in the waste water received from said reservoir and supplying the waste water to said first tower after decomposing organic substances.

14. The apparatus according to claim 13, wherein said second tower comprises:
an outer tube of a hollow cylinder;
a radiation processor which contains grains of natural radiator substance combined with a binder; and
a biological processor which contains aerobic bacteria;
wherein the water received from said reservoir passes through said radiation processor and said biological processor in said outer tube.

15. The apparatus according to claim 14, wherein the grains of natural radiator substance includes a rare earth having natural radiations.

16. The apparatus according to claim 14, further comprising:
a washing machine which washes an object physically with use of water; and
a supply path which supplies the activated water from said first tower to said washing machine.

17. The apparatus according to claim 16, wherein said washing machine washes an object with brushing.

18. The apparatus according to claim 13, further comprising a preprocessing tank provided between said reservoir and said second tower to control concentration of impurities included in the waste water.

19. The apparatus according to claim 9, wherein said first tower further comprises a supplier which supplies virgin water into said first tower.

20. The apparatus according to claim 9, wherein said reservoir comprises a filter for removing dirt floating in the waste water.
